# EUROPÄISCHE PATENTSCHRIFT

(11) **EP 1 217 570 B1**
(45) Veröffentlichungstag und Bekanntmachung des Hinweises auf die Patenterteilung: **26.05.2004**
(21) Anmeldenummer: 01127806.6
(22) Anmeldetag: 22.11.2001
(51) Int. Cl.: G06K 7/00, G06K 13/08

(54) **Datenkartenaggregat**
Card reader
Lecteur de carte

(30) Priorität: 15.12.2000 DE 20021266 U
(43) Veröffentlichungstag der Anmeldung: 26.06.2002
(73) Patentinhaber: SIEMENS AKTIENGESELLSCHAFT, 80333 München (DE)
(72) Erfinder: Hug, Klaus, 78727 Oberndorf (DE)

(56) Entgegenhaltungen:
- EP-A- 0 429 976
- FR-A- 2 781 904

## Beschreibung

Die Erfindung betrifft ein Datenkartenaggregat mit Mitteln für einen selbsttätigen Transport von Datenkarten zwischen einer Eingabe-/Entnahmeposition und einer Lese-/Schreibposition, wobei ein mit einer den Datenkarten zugeordneten Führung versehener Träger vorgesehen ist, in den Bewegungsraum der Datenkarten eine motorisch betätigte Transportwege eingreift und Mittel vorgesehen sind, mit welchen eine Einführöffnung des Datenkartenaggregates verschließbar ist.

Ein solches Datenkartenaggregat wird im Dokument EP-A-0 429 976 offenbart.

Mit einem derartigen Datenkartenaggregat soll vermieden werden, dass die Datenübertragung zwischen einem Datenerfassungsgerät und einer Datenkarte in betrügerischer Absicht gestört werden kann. Beispielsweise, dass während der Datenübertragung eine Datenkarte kurzzeitig gezogen und wieder gesteckt wird oder, dass die Kontaktierung einer Datenkarte dadurch unterbrochen wird, dass Folien oder elektrisch leitendes Material in das Datenkartenaggregat eingeführt werden. Andererseits ist das Verschließen der Zugangsöffnung des Datenkartenaggregates notwendig, wenn in dem Einsatzmilieu des Datenkartenaggregates bzw. dem Gerät, in dem das Datenkartenaggregat eingebaut ist, eine relativ hohe Verschmutzungsgefahr besteht.

Derartige Anforderungen an ein Datenkartenaggregat sind beispielsweise bei der Erfassung von Fahrtdaten in Kraftfahrzeugen gegeben, bei der den Fahrern mit Halbleiterspeichern versehene Datenkarten zugeordnet sind, welche der fahrerbezogenen Speicherung wenigstens der Arbeits- und Ruhezeiten dienen. Dabei kann das Datenkartenaggregat in einem Fahrtschreiber integriert oder als autonomes Aggregat im Armaturenbrett eines Kraftfahrzeuges angeordnet sein. Jedenfalls muss es im haptischen Bereich der Fahrer angeordnet sein, wo eine erhebliche Verschmutzungsgefahr und Raumnot herrschen.

Die der Erfindung zugrunde liegende Aufgabe bestand somit darin, dass einerseits das zu schaffende Datenkartenaggregat serientauglich ist, kostengünstig hergestellt werden kann und, um vielseitig verwendbar zu sein, ein Minimum an Bauhöhe aufweist andererseits die Mittel zum Verschließen der Einführöffnung des Datenkartenaggregates bei den in einem Kraftfahrzeug gegebenen rauhen Betriebsbedingungen eine verlässliche Funktion und ausreichend Schutz gegen Manipulationen bieten.

Die Lösung der gestellten Aufgabe ist dadurch gekennzeichnet, dass eine um eine quer zu den Bewegungsrichtungen der Datenkarten angeordnete Achse schwenkbare, zweiarmige Wippe vorgesehen ist, deren einer Arm ein Schließelement und deren anderer Arm wenigstens ein Tastelement aufweist, dass der Abstand zwischen dem Schließelement und dem Tastelement größer ist als die Länge einer Datenkarte, dass wenigstens an dem Schließelement gegen die Bewegungsebene der Datenkarten geneigte Flächen derart ausgebildet sind, dass mit dem Ein-/Ausgeben einer Datenkarte ein Verschwenken der Wippe erfolgt und dass, wenn sich eine Datenkarte in der Lese-/Schreibposition befindet die Datenkarte in den Schwenkbereich des Tastelementes derart eingreift, dass die Wippe in der Schließstellung arretiert ist.

Ein bevorzugtes Ausführungsbeispiel sieht vor, dass die Wippe auf der mit wenigstens einem Friktionselement versehenen Transportwelle gelagert ist und dass der Träger im wesentlichen als flache Platte mit einer den Datenkarten als Führung dienenden Senkung ausgebildet ist, dass an dem Träger Mittel zur Halterung eines Antriebsmotors, zur Lagerung der Transportwelle und wenigstens einer der getrieblichen Verbindung zwischen dem Antriebsmotor und der Transportwelle dienenden Schneckenwelle angeformt sind und dass an dem Träger gleichgerichtet mit den Halterungs- und Lagermitteln Abstandsbolzen zur Befestigung des Datenkartenaggregates am Einbauort ausgebildet sind.

Wesentlich ist ferner eine Ausbildung derart, dass die Länge des Schließelementes größer ist als die Breite der den Datenkarten im Träger zugeordneten Führung und dass in dem Träger eine dem Querschnitt und der Länge des Schließelementes entsprechende Nut ausgebildet ist.

Eine vorteilhafte Variante ist dadurch gekennzeichnet, dass ein die Kontakte von in der Lese-/Schreibposition befindlichen Datenkarten kontaktierender Lese-/Schreibkontaktsatz unmittelbar an der Wippe befestigt ist.

Eine zweckmäßige Ausbildung der Wippe sieht vor, dass die Wippe einteilig und u-förmig profiliert ausgebildet ist, dass in den Schenkeln der Wippe miteinander fluchtende Lagerbohrungen angebracht sind und dass parallel zur Lagerachse ein Schließelement und wenigstens ein Tastelement angeformt sind.

Weitere vorteilhafte Ausgestaltungen der Erfindung gehen aus den vorstehend nicht zitierten Unteransprüchen und aus der Beschreibung der beigefügten Zeichnungen hervor.

Die gefundene Lösung bietet im Hinblick auf die aufgabengemäß gestellten Forderungen insbesondere den Vorteil einer extrem geringen Bauhöhe, sodass das betreffende Datenkartenaggregat beispielsweise auch in einem Fahrtschreiber untergebracht werden kann, der ein flaches, den Abmessungen eines Radiofachs entsprechendes Einbaugehäuse aufweist. Erwähnenswert ist ferner der von der Sorgfalt eines Benutzers unabhängige Transport einer eingegebenen Datenkarte in eine eindeutige Lese-/Schreibposition, die stetige kraftschlüssige und somit stoßsichere Verbindung einer eingegebenen Datenkarte mit den Transportmitteln sowie die stetige getriebliche Verbindung zwischen der Transportwelle und dem Antriebsmotor.

Von entscheidender Bedeutung ist jedoch, dass die Wippe, wenn sich eine Datenkarte in der Lese-/Schreibposition befindet, arretiert ist, mit anderen Worten, die Einführöffnung des Datenkartenaggregates mittelbar über die Datenkarte geschlossen wird, wobei das Schließelement in die in dem Träger vorgesehene Nut formschlüssig eingreift. Dadurch ergibt sich mit sehr geringem Aufwand eine sichere Zuhaltung der Einführöffnung und eine gute Dichtfunktion, insbesondere wenn die Nut mit einem elastomeren Material ausgekleidet ist. Erwähnenswert ist außerdem, dass sich bei einer ungleicharmigen Ausbildung und Lagerung der Wippe mit am längeren Arm angebrachtem Schließelement eine verbesserte Manipulationssicherheit insofern ergibt als ein Anheben des Schließelementes bei in Lese/Schreibposition befindlicher Datenkarte bewirkt, dass die Datenkarte mit einer gemäß dem gewählten Hebelverhältnis erhöhten Kraft festgehalten wird.

Die konstruktive Gestaltung des Datenkartenaggregates mit einem verwindungssteifen Träger, der beispielsweise auch als Outsert-Platine ausgebildet werden kann, ermöglicht, da die einzelnen Bauelemente und Baugruppen unmittelbar dem Träger zugeordnet sind, eine minimale Toleranzaddition, sodass die Bauteilefertigung mit großserienfähigen Toleranzen erfolgen kann. Außerdem ist hervorzuheben, dass das erfindungsgemäße, autonome Datenaggregat vielseitig verwendbar ist und am Einbauort lediglich ein Anflanschen und eine Steckverbindung der Leiterbahn erforderlich macht. Im übrigen läßt sich insbesondere die Ausführungsform, bei der die Wippe einstückig ausgebildet ist und dem Lese-/Schreibkontaktsatz als Träger dient, mit einem Minimum an Bauteilen realisieren und somit die Herstellung und die Montage vereinfachen.

Von den Zeichnungen zeigen:
- Figur 1: ein Ausführungsbeispiel des erfindungsgemäßen Datenkartenaggregates, in einer perspektivischen Darstellung,
- Figur 2: eine ebenfalls perspektivisch dargestellte, als Träger bezeichnete Montageplatine des Datenkartenaggregates gemäß Figur 1 mit einer vormontierten Transportwelle,
- Figur 3: eine gemäß Figur 1 als kombiniertes Bauteil ausgebildete Wippe in perspektivischer Darstellung,
- Figur 4: einen Schnitt des Datenkartenaggregates gemäß der Schnittlinie A-B in Figur 1, wobei sich innerhalb des Datenkartenaggregates eine Datenkarte in Lese-/Schreibposition befindet,
- Figur 5: eine weitere perspektivisch dargestellte Ausführungsform der Wippe mit einem an ihr befestigten Lese-/Schreibkontaktsatz.

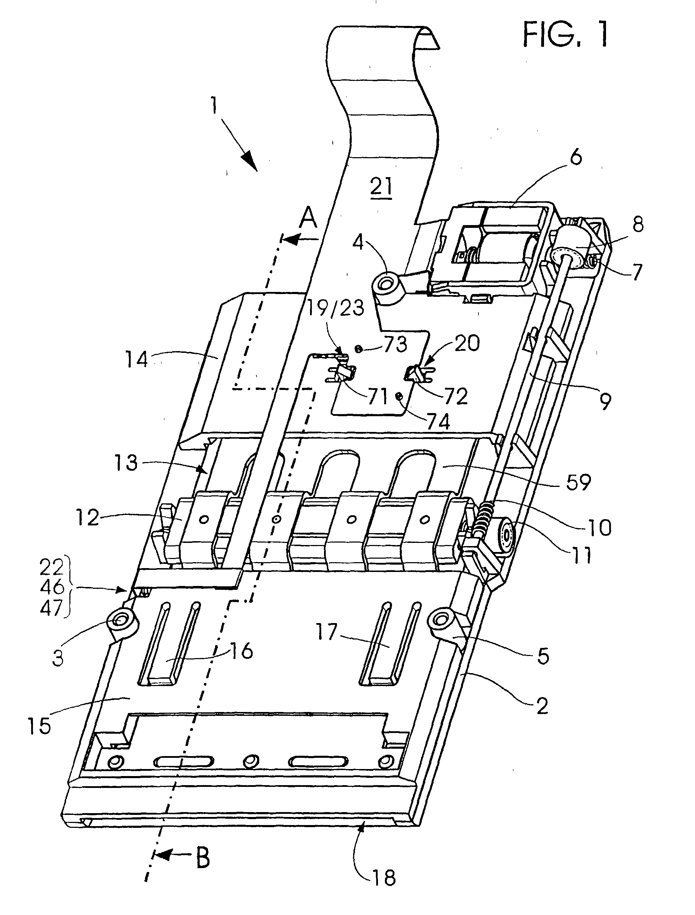

Die der Übersicht dienende Figur 1 zeigt, dass das Datenkartenaggregat 1 einen plattenförmigen Träger 2 aufweist, an welchem Abstandbolzen 3, 4 und 5 zum Anflanschen des Datenkartenaggregates 1 am Einbauort unmittelbar angeformt sind. Dabei können die Abstandsbolzen 3, 4, 5 mit nicht näher bezeichneten Durchgangsbohrungen, mit selbstschneidenden Schrauben zugeordneten Sackbohrungen oder mit Innengewinden ausgebildet sein. Mit 6 ist ein an dem Träger 2 gehalterter Antriebsmotor, vorzugsweise ein Gleichstrommotor bezeichnet, der über eine auf dessen Welle angeordnete Schnecke 7 beispielsweise mit einem schrägverzahnten Stirnrad 8 in Eingriff steht. Letzteres ist auf einer Verbindungswelle 9 befestigt, die ebenfalls auf dem Träger 2 gelagert ist und über eine Schnecke 10 mit einem Zahnrad 11 kämmt, welches, was später noch näher erläutert wird, mit einer ein oder mehrere Friktionselemente tragenden Transportwelle verdrehfest verbunden bzw. an der Transportwelle unmittelbar angeformt ist. Die Figur 1 zeigt außerdem eine mittels eines Lagerteils 12 auf der Transportwelle schwenkbar gelagerte Wippe 13 sowie eine Brücke 14 und eine Abdeckung 15, die die Wippe 13 überdecken und mit dem Träger 2 verbunden sind, wobei die Brücke 14 und die Abdeckung 15 auch als ein einziges Bauteil hergestellt werden können. Die Abdeckung 1 5 weist der Wippe 13 zugeordnete federnde Niederhalter 16 und 17 auf und bildet zusammen mit dem Träger 2 einen Ausrichtspalt 18. An der Brücke 14 ist ein den Kontakten der Datenkarten zugeordneter Lese-/Schreibkontaktsatz 19 befestigt, wobei die Brücke 14 in geeigneter Weise freigespart ist. Mit 21 ist eine flexible Leiterbahn bezeichnet, die mit dem Antriebsmotor 6, dem Lese-/Schreibkontaktsatz 19, einer die Eingabe-/Entnahmeposition einer Datenkarte signalisierenden Lichtschranke 22 und einem die Lese-/Schreibposition einer Datenkarte meldenden Schalter 23 verbunden ist. Klinken 71 und 72 dienen der Befestigung des Lese-/Schreibkontaktsatzes 19 indem sie an dem den Lese-/Schreibkontaktsatz 19 halternden Rahmen, der auch der Halterung des Schalters 23 dient, angreifen. Der Vollständigkeit halber sei in diesem Zusammenhang noch erwähnt, dass an dem Rahmen des Lese-/Schreibkontaktsatzes 19 angeformte Zapfen 73 und 74 der Ausrichtung von Rahmen und Leiterbahn 21 vor dem Verlöten dienen.

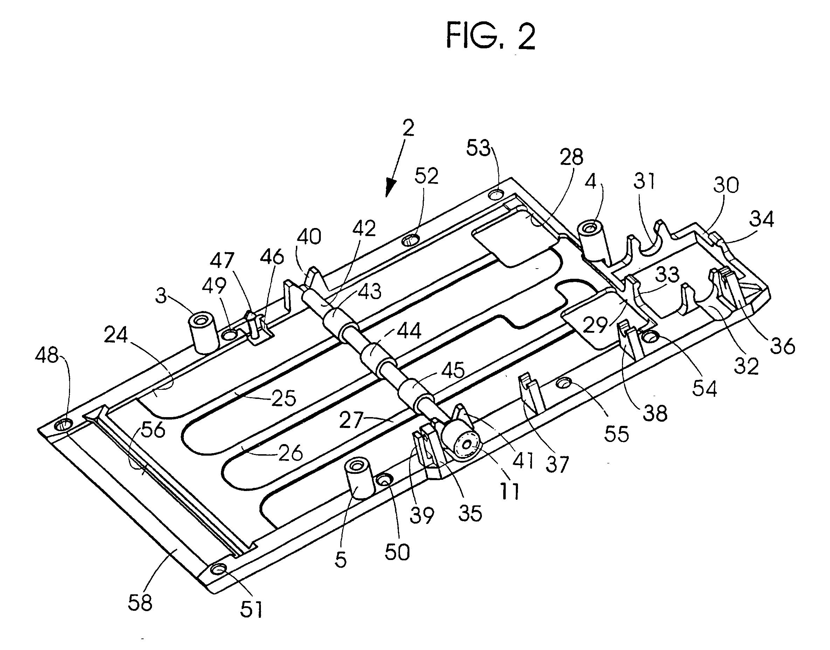

Wie aus der Figur 2 hervorgeht weist der Träger 2, der auch als Outsert-Platine hergestellt werden kann, eine den Datenkarten als zweidimensionale Führung dienende einseitig offene Senkung 24 auf innerhalb der durch nicht bezeichnete Aussparungen in Bewegungsrichtung der Datenkarten verlaufende Führungsrippen 25, 26 und 27 angeformt sind. Mit 28 und 29 sind Freisparungen bezeichnet, die auch als Durchbrüche ausgebildet sein können. Ein mit 30 bezeichneter, am Träger 2 angeformter Rahmen dient der Halterung des Antriebsmotors 6 und zwar einer Halterung, die vorzugsweise eine mit der Außenfläche des Trägers 2 bündige Anordnung des Antriebsmotors 6 gestattet. An dem Rahmen 30 ausgebildete Lageschalen 31 und 32 mit zugeordneten, nicht näher bezeichneten Schnapphaken sowie federnde Finger 33 und 34 dienen als Festhalteelemente. Mit 35 und 36 sowie 37 und 38 sind an dem Träger 2 angeformte Lagerarme und Stützpfeiler bezeichnet, die der Verbindungswelle 9 zugeordnet sind. Ein Federschenkel 39 dient dem axialen Abstützen der Verbindungswelle 9. Zwei weitere am Träger 2 angeformte Lagerschenkel 40 und 41 sind für die Lagerung der bereits erwähnten Transportwelle 42 vorgesehen und derart ausgebildet, dass die Transportwelle 42 durch Einrasten montiert werden kann. Letzte trägt das Zahnrad 11 sowie aus elastomerem Material bestehende Friktionselemente 43, 44 und 45, die auf der Transportwelle 42, die mehrteilig oder als ein einziges Bauteil spritzgießtechnisch herstellbar ist, derart angebracht sind, dass sie wenn die Transportwelle 42 im Träger 2 montiert ist, den Führungsrippen 25, 26, 27 zugeordnet sind. Eine mit 46 bezeichnete und mit einem Rastzapfen 47 versehene Fassung dient der Aufnahme und Halterung der die Eingabe-/Entnahmeposition signalisierenden Lichtschranke 22. Bohrungen 48, 49 und 50, 51 dienen der Aufnahme von an der Abdeckung 15 angeformten Zapfen; weitere Bohrungen 52, 53, 54 und 55 sind für das Anbringen der Brücke 14 mittels geeigneter Zapfen vorgesehen. Die Befestigung der beiden Bauteile erfolgt beispielsweise durch Warmstauchen der an der Abdeckung 15 und an der Brücke 14 ausgebildeten Zapfen an der Außenseite des Trägers 2.

Die Figur 2 zeigt ferner noch eine in den Träger 2 eingelassene, v-förmige Nut 56, die einem an der Wippe 13 befestigten, ebenfalls einen v-förmigen Querschnitt aufweisenden Schließelement 57 zugeordnet ist. Die Nut 56 ist vorzugsweise nach der Außenseite des Trägers 2 hin offen ausgebildet damit mittels der Datenkarten eingebrachte Staub- und Schmutzpartikel aus dem Datenkartenaggregat 1 austreten können. Außerdem können die Flanken der Nut 56, um eine erhöhte Dichtfunktion zu erzielen, mit einem elastomeren Material belegt sein. Von Bedeutung ist jedoch, dass die Nut 56 die durch die Senkung 24 vorgegebene seitliche Führung der Datenkarten beidseitig übergreift, sodass, wenn sich das an der Wippe 13 befestigte und der Nut 56 entsprechende Schließelement 57 in die Nut 56 eingreift, der Zugang in ein funktionsfertig eingebautes Datenkartenaggregat 1 wirksam abgedichtet ist. Eine eingangsseitig am Träger 2 angeformte Rampe 58 dient der Führung einer einzugebenden Datenkarte in Richtung des Ausrichtspalts 18.

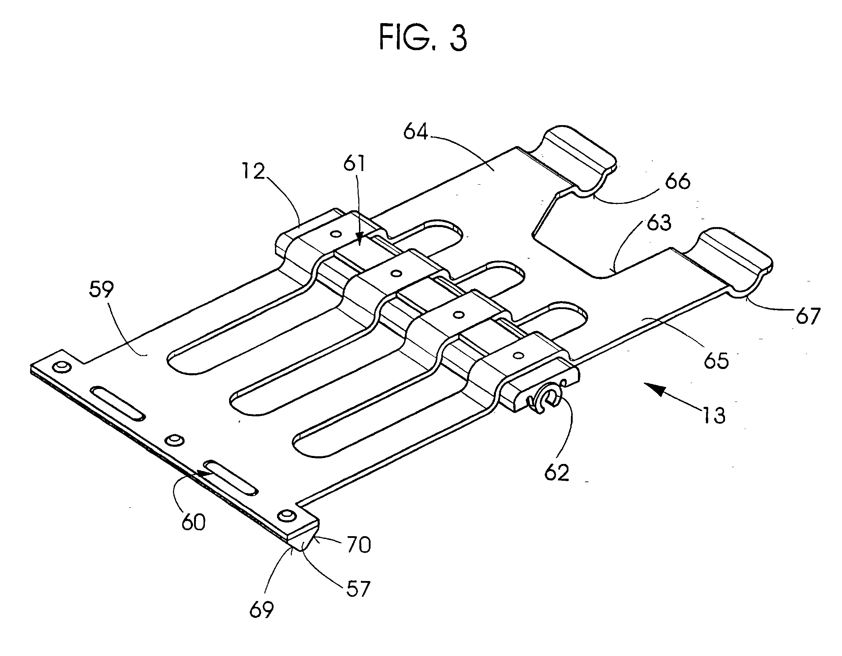

Gemäß der Figur 3 besteht die Wippe 13 des bisher beschriebenen Ausführungsbeispiels aus einem biegesteifen, zweiarmigen Hebel 59, dem Lagerteil 12 und dem Schließelement 57, wobei letztere in geeigneter Weise an dem Hebel 59 befestigt sind. Außerdem sind Schlitz-Steg- und Schlitz-Block-Fügeverbindungen, von denen jeweils eine mit 60 und 61 bezeichnet sind vorgesehen, um eine exakte parallele Ausrichtung von Schließelement 57 und Lagerteil 12 zu erzielen. Mit 62 ist eine von zwei Lagerschalen bezeichnet, mittels denen die Wippe 13 auf der Transportwelle 42 gelagert ist. Eine Aussparung 63 dient dem Durchgreifen des Lese/Schreibkontaktsatzes 19 und des mit diesem in einer Baueinheit zusammengefassten Schalters 23 in den Bewegungsraum der Datenkarten. An die Aussparung 63 einschließenden Fingern 64 und 65 der Wippe 13 sind miteinander fluchtende Sicken angebracht, die zwei Tastelemente 66 und 67 darstellen.

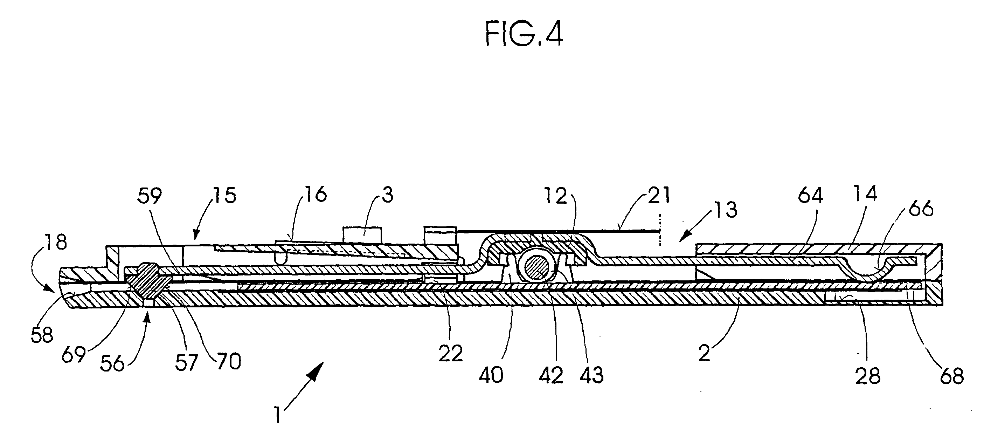

Der Schnitt gemäß Figur 4 zeigt das Datenaggregat 1 in einem Zustand, bei dem sich eine Datenkarte 68 in der Lese-/Schreibposition befindet. In diese Position gelangt die Datenkarte 68 in dem sie in den Ausrichtspalt 18 des Datenkartenaggregates 1 eingeführt und von Hand bis zur Transportwelle 42 bzw. bis zu den mitnehmenden Friktionselementen 43, 44, 45 der Transportwelle 42 vorgesteckt wird. Dabei wird während des Vorsteckens die unmittelbar vor der Transportwelle 42 angeordnete Lichtschranke 22 betätigt. Das Signal der Lichtschranke 22 startet den Antriebsmotor 6, der die Transportwelle 42 in Richtung Einziehen der Datenkarte 68 so lange antreibt bis er durch ein Signal des Schalters 23 abgeschaltet wird.

Bezüglich der Funktion der Wippe 13, die auch unabhängig von der Transportwelle 42 gelagert sein kann, sei noch erwähnt, dass beim Vorstecken der Datenkarte 68 diese im Zusammenwirken mit der Betätigungsfläche 69 des Schließelementes 57 die Wippe 13 gegen die Wirkung der Niederhalter 16, 17 verschwenkt. Nachfolgend bleibt die Wippe 13 verschwenkt bis das Schließelement 57 aufgrund des nach dem Vorstecken erfolgenden selbsttätigen Transportes der Datenkarte 68 von der Datenkarte 68 abgleiten kann und wieder in die Nut 56 eingreift. Befindet sich die Datenkarte 68 in der in der Figur 4 dargestellten Endlage, das heißt in der Lese-/Schreibposition, so ist ein Anheben der Wippe 1 3 von außen dadurch verhindert, dass die Tastelemente 66, 67 mit geringem Abstand der Datenkarte 68 gegenüberstehen.

Beim Ausgeben der Datenkarte 68 wird der Antriebsmotor 6 durch eine Tastenbetätigung gestartet und die Datenkarte 68 bis zum Außereingriffgehen mit den Friktionselementen 43, 44, 45 der Transportwelle 42 verschoben. Die Datenkarte 68 befindet sich dann in der Entnahmeposition; der Antriebsmotor 6 wird beim Entnehmen der Datenkarte 68 durch ein Signal der Lichtschranke 22 oder zeitabhängig abgeschaltet. Während des Transportes der Datenkarte 68 wird die Wippe 1 3, indem die eine, nicht näher bezeichnete Stirnkante der Datenkarte 68 mit der Betätigungsfläche 70 des Schließelementes 57 zusammenwirkt, wiederum verschwenkt, was voraussetzt, dass die Datenkarte 68 beim Anheben der Wippe 13 den Schwenkbereich der Tastenelemente 66, 67 verlassen haben muss. Das heißt, der Abstand zwischen dem Schließelement 57 und den Tastelementen 66, 67 muss wenigstens gleich, für eine sichere Funktion jedoch größer sein als die Länge der Datenkarte 68. Nach der Entnahme der Datenkarte 68 wird die Wippe 13 durch die Niederhalter 16, 17 in die Ausgangslage, in der das Schließelement 57 in Verbindung mit der Nut 56 eine Dichtfunktion ausübt, zurückgeschwenkt.

Die Montage des Datenaggregates 1 geht aus von Vorlegen des Trägers 2, Einrasten der Transportwelle 42 und dem Einsetzen des Antriebsmotors 6, wobei in vorteilhafter Weise beim Einsetzen des Antriebsmotors 6 eine vormontierte Baugruppe bestehed aus dem Antriebsmotor 6, der Leiterbahn 21, dem dem Schalter 23 umfassenden Lese-/Schreibkontaksatz 19 und der Lichtschranke 22 auf dem Träger 2 befestigt wird indem der Antriebsmotor 6 und die Lichtschranke 22 auf dem Träger 2 verrastet werden. Nachfolgend erfolgt das Aufsetzen der Verbindungswelle 9 sowie das Einrasten der Wippe 13 auf die Transportwelle 42, wobei die vormontierte Leiterbahn-Baugruppe, das heißt der den Lese-/Schreibkontaktsatz 19 tragende Abschnitt der Leiterbahn-Baugruppe zunächst zur Seite umgeschlagen wird. Nach dem Aufstecken der Brücke 14 und der Abdeckung 15 und der Verbindung der beiden Bauteile mit dem Träger 2 wird das Datenkartenaggregat 1 durch Verrasten des Lese-/Schreibkontaktsatzes 19 funktionsfertig komplettiert.

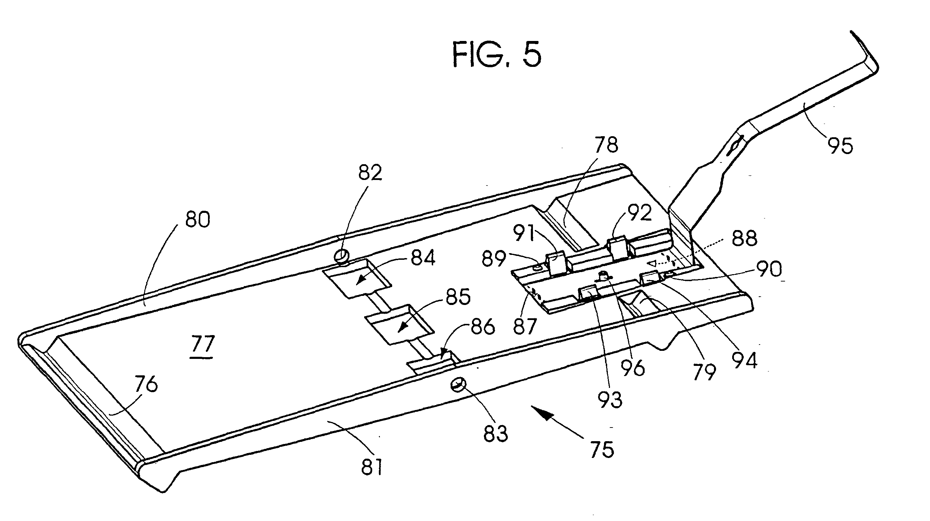

Bei der Ausführungsform einer Wippe 75 gemäß Figur 5 ist ein Schließelement 76 unmittelbar an dem plattenförmigen Körper 77 der Wippe 75 ausgebildet. Ebenso sind Tastelemente 78 und 79 angeformt. Der Bildung eines u-Profils und somit der Versteifung der Wippe 75 dienen mit 80 und 81 bezeichnete Schenkel. In letzteren sind der Transportwelle 42 zugeordnete Lagerbohrungen 82 und 83 angebracht. Durchbrüche 84, 85 und 86 dienen dem Durchgreifen der auf der Transportwelle 42 angeordneten Friktionselemente 43, 44 und 45 in den Bewegungsraum der Datenkarten 68. Mit 87 ist eine in der Wippe 75 ausgebildete Fassung bezeichnet, in die ein Lese-/Schreibkontaktsatz 88 von der den Datenkarten 68 zugeordneten Seite der Wippe 75 her einsetzbar ist. Dabei dienen zwischen einem Rahmen des Lese-/Schreibkontaktsatzes 88 und der Wippe 75 ausgebildete Zapfenverbindungen 89 und 90 der Ausrichtung des Lese-/Schreibkontaktsatzes 88 und an dem Rahmen angeformte Rastklinken 91, 92, 93 und 94 der Verriegelung des Lese-/Schreibkontaktsatzes 88 auf der Wippe 75. Eine mit dem Lese-/Schreibkontaktsatz 88 verbundene flexible Leiterbahn ist mit 95 bezeichnet; ein Zentrierstift 96 dient der Ausrichtung der Leiterbahn 95 vor deren Verlöten mit den Schreib-/Lesekontakten. Mit dieser einteiligen und formstabilen Ausführungsform der Wippe 75 läßt sich der Bauteilebedarf des Datenkartenaggregates 1, insbesondere wenn der dem Schließelement 76 zugeordnete Ausrichtspalt 18 und wenigstens ein federnder Niederhalter 16, 17 unmittelbar an dem Träger 2 ausgebildet sind, auf ein Minimum reduzieren.

## Patentansprüche

1. Datenkartenaggregat mit Mitteln für einen selbsttätigen Transport von Datenkarten zwischen einer Eingabe-/Entnahmeposition und einer Lese-/Schreibposition, wobei ein mit einer den Datenkarten zugeordneten Führung versehener Träger (2) vorgesehen ist, in den Bewegungsraum der Datenkarten eine motorisch betätigte Transportwelle (42) eingreift und Mittel vorgesehen sind, mit welchen eine Einführöffnung des Datenkartenaggregates verschließbar ist,
**dadurch gekennzeichnet,**
**dass** eine um eine quer zu den Bewegungsrichtungen der Datenkarten (68) angeordnete Achse schwenkbare, zweiarmige Wippe (13) vorgesehen ist, deren einer Arm ein Schließelement (57) und deren anderer Arm wenigstens ein Tastelement (66, 67) aufweist,
**dass** der Abstand zwischen dem Schließelement (57) und dem Tastelement (66, 67) gleich oder größer ist als die Länge einer Datenkarte (68),
**dass** wenigstens an dem Schließelement (57) gegen die Bewegungsebene der Datenkarten (68) geneigte Flächen (69, 70) derart v-förmig ausgebildet sind, dass mit dem Ein-/Ausgeben einer Datenkarte (68) ein Verschwenken der Wippe (13) erfolgt und
**dass**, wenn sich eine Datenkarte (68) in der Lese-/Schreibposition befindet die Datenkarte (68) in den Schwenkbereich des Tastelementes (66, 67) derart eingreift, dass die Wippe (13) in der Schließstellung arretiert ist.

2. Datenkartenaggregat nach Anspruch 1,
**dadurch gekennzeichnet,**
**dass** die Wippe (13) auf der mit wenigstens einem Friktionselement (43, 44, 45) versehenen Transportwelle (42) gelagert ist.

3. Datenkartenaggregat nach Anspruch 1,
**dadurch gekennzeichnet,**
**dass** die Wippe (13) ungleicharmig ausgebildet ist, wobei das Schließelement (57) an dem längeren Arm der Wippe (13) vorgesehen ist.

4. Datenkartenaggregat nach Anspruch 1,
**dadurch gekennzeichnet,**
**dass** wenigstens das Tastelement (66, 67) unmittelbar an der Wippe (13) ausgebildet ist.

5. Datenkartenaggregat nach Anspruch 1,
**dadurch gekennzeichnet,**
**dass** in dem Träger (2) Aussparungen (28, 29) für den Durchtritt von Tastelement (66, 67) und Schließelement (57) durch den Bewegungsraum der Datenkarten (68) vorgesehen sind.

6. Datenkartenaggregat nach Anspruch 1,
**dadurch gekennzeichnet,**
**dass** die Länge des Schließelementes (57) größer ist als die Breite der den Datenkarten (68) im Träger (2) zugeordneten Führung und
**dass** in dem Träger (2) eine dem Querschnitt und der Länge des Schließelementes (57) entsprechende Nut (56) ausgebildet ist.

7. Datenkartenaggregat nach Anspruch 6,
**dadurch gekennzeichnet,**
**dass** die Nut (56) mit einem elastomeren Material ausgekleidet ist.

8. Datenkartenaggregat nach Anspruch 1,
**dadurch gekennzeichnet,**
**dass** eine mit dem Träger (2) verbindbare, die Wippe (13) übergreifende Brücke (14) vorgesehen ist und
**dass** ein die Kontakte von in der Lese-/Schreibposition befindlichen Datenkarten (68) kontaktierender Lese-/Schreibkontaktsatz (19) an der Brücke (14) befestigt ist.

9. Datenkartenaggregat nach Anspruch 1,
**dadurch gekennzeichnet,**
**dass** ein die Kontakte von in der Lese-/Schreibposition befindlichen Datenkarten (68) kontaktierender Lese-/Schreibkontaktsatz (19) unmittelbar an der Wippe (13) befestigt ist.

10. Datenkartenaggregat nach Anspruch 1,
**dadurch gekennzeichnet,**
**dass** eine mit dem Träger (2) verbindbare, die Wippe (13) übergreifende Abdeckung (15) vorgesehen ist, welche zusammen mit dem Träger (2) einen dem Schließelement (57) zugeordneten Ausrichtspalt (18) bildet.

11. Datenkartenaggregat nach Anspruch 1,
**dadurch gekennzeichnet,**
**dass** ein dem Schließelement (57) zugeordneter Ausrichtspalt (18) unmittelbar an dem Träger (2) ausgeformt ist.

12. Datenkartenaggregat nach Anspruch 10,
**dadurch gekennzeichnet,**
**dass** an der Abdeckung (15) wenigstens ein der Wippe (13) zugeordneter, federnder Niederhalter (16, 17) ausgebildet ist.

13. Datenkartenaggregat nach Anspruch 1,
**dadurch gekennzeichnet,**
**dass** wenigstens ein der Wippe (13) zugeordneter, federnder Niederhalter (16, 17) unmittelbar an dem Träger (2) angeformt ist.

14. Datenkartenaggregat nach Ans pruch 1,
**dadurch gekennzeichnet,**
**dass** der Träger (2) im wesentlichen als flache Platte mit einer den Datenkarten (68) als Führung dienenden Senkung (24) ausgebildet ist, dass an dem Träger (2) Mittel (30, 31, 32, 33, 34) zur Halterung eines Antriebsmotors (6), zur Lagerung (40, 41) der Transportwelle (42) und zur Lagerung (35, 36, 37, 38, 39) und wenigstens einer der getrieblichen Verbindung zwischen dem Antriebsmotor (6) und der Transportwelle (42) dienenden Verbindungswelle (9) angeformt sind und
**dass** an dem Träger (2) gleichgerichtet mit den Halterungs- und Lagermitteln Abstandsbolzen (3, 4, 5) zur Befestigung des Datenkartenaggregates (1) am Einbauort ausgebildet sind.

15. Datenkartenaggregat nach Anspruch 1,
**dadurch gekennzeichnet,**
**dass** die Eingabe-/Entnahmeposition und die Lese-/Schreibposition einer Datenkarte (68) meldende Schalter (22, 23) vorgesehen sind und
**dass** die Schalter (22, 23), der Lese-/Schreibkontaktsatz (19) und der Antriebsmotor (6) mittels einer flexiblen, aus dem Datenkartenaggregat (1) herausgeführten Leiterbahn (21) verbunden sind.

16. Datenkartenaggregat nach Anspruch 1,
**dadurch gekennzeichnet,**
**dass** die Wippe (13) einteilig und u-förmig profiliert ausgebildet ist,
**dass** in den Schenkeln (80, 81) der Wippe (13) miteinander fluchtende Lagerbohrungen (82, 83) angebracht sind und
**dass** parallel zur Lagerachse ein Schließelement (76) und wenigstens ein Tastelement (78, 79) unmittelbar angeformt sind.

## Claims

1. Data card unit with means for automatically transporting data cards between an insertion/removal position and a reading/writing position, a carrier (2) provided with a guide assigned to the data cards being provided, a motor-actuated transporting shaft (42) reaching into the movement space of the data cards and means by which an insertion opening of the data card unit can be closed being provided, **characterized in that** a two-armed rocker (13) which can be pivoted about an axis arranged transversely in relation to the directions of movement of the data cards (68) is provided, one arm of which rocker has a closing element (57) and the other arm of which has at least one sensing element (66, 67), **in that** the distance between the closing element (57) and the sensing element (66, 67) is equal to or greater than the length of a data card (68), **in that** surfaces (69, 70) sloping towards the plane of movement of the data cards (68) are formed in a v-shaped manner at least on the closing element (57) in such a way that, when a data card (68) is inserted/ejected, a pivoting of the rocker (13) takes place and that, when a data card (68) is located in the reading/writing position, the data card (68) reaches into the pivoting area of the sensing element (66, 67) in such a way that the rocker (13) is arrested in the closed position.

2. Data card unit according to Claim 1, **characterized in that** the rocker (13) is mounted on the transporting shaft (42) provided with at least one friction element (43, 44, 45).

3. Data card unit according to Claim 1, **characterized in that** the rocker (13) is formed with arms of unequal length, the closing element (57) being provided on the longer arm of the rocker (13).

4. Data card unit according to Claim 1, **characterized in that** at least the sensing element (66, 67) is formed directly on the rocker (13).

5. Data card unit according to Claim 1, **characterized in that** clearances (28, 29) for the sensing element (66, 67) and the closing element (57) to pass through the movement space of the data cards (68) are formed in the carrier (2).

6. Data card unit according to Claim 1, **characterized in that** the length of the closing element (57) is greater than the width of the guide assigned to the data cards (68) in the carrier (2) and **in that** a groove (56) corresponding to the cross section and the length of the closing element (57) is formed in the carrier (2).

7. Data card unit according to Claim 6, **characterized in that** the groove (56) is lined with an elastomeric material.

8. Data card unit according to Claim 1, **characterized in that** a bridge (14) which can be connected to the carrier (2) and reaches over the rocker (13) is provided and **in that** a set of reading/writing contacts (19) electrically contacting the contacts of data cards (68) located in the reading/writing position is fastened on the bridge (14).

9. Data card unit according to Claim 1, **characterized in that** a set of reading/writing contacts (19), electrically contacting the contacts of data cards (68) located in the reading/writing position, is fastened directly on the rocker (13).

10. Data card unit according to Claim 1, **characterized in that** a covering (15) which can be connected to the carrier (2) and reaches over the rocker (13) is provided and, together with the carrier (2), forms an alignment gap (18) assigned to the closing element (56).

11. Data card unit according to Claim 1, **characterized in that** an alignment gap (18) assigned to the closing element (57) is formed directly on the carrier (2).

12. Data card unit according to Claim 10, **characterized in that** at least one resilient holding-down device (16, 17), assigned to the rocker (13), is formed on the covering (15).

13. Data card unit according to Claim 1, **characterized in that** at least one resilient holding-down device (16, 17), assigned to the rocker (13), is formed directly on the carrier (2).

14. Data card unit according to Claim 1, **characterized in that** the carrier (2) is formed essentially as a flat plate with a depression (24) serving as a guide for the data cards (68), **in that** means (30, 31, 32, 33, 34) for securing a drive motor (6), for mounting (40, 41) the transporting shaft (42) and for mounting (35, 36, 37, 38, 39) [sic] and at least one connecting shaft (9) serving for the drive connection between the drive motor (6) and the transporting shaft (42) are formed on the carrier (2) and **in that** spacing bolts (3, 4, 5) for fastening the data card unit (1) at the installation location are formed on the carrier (2), aligned in the same direction as the securing and mounting means.

15. Data card unit according to Claim 1, **characterized in that** switches (22, 23) reporting the insertion/removal position and the reading/writing position of a data card (68) are provided and **in that** the switches (22, 23), the set of reading/writing contacts (19) and the drive motor (6) are connected by means of a flexible strip conductor (21) led out from the data card unit (1).

16. Data card unit according to Claim 1, **characterized in that** the rocker (13) is formed as one part and profiled in a u-shaped manner, **in that** bearing bores (82, 83) in line with one another are provided in the legs (80, 81) of the rocker (13) and **in that** a closing element (76) and at least one sensing element (78, 79) are formed on directly, parallel to the bearing axis.

## Revendications

1. Lecteur de cartes de données doté de moyens qui permettent un transport automatique de cartes de données entre une position d'insertion/extraction et une position de lecture/écriture, un support (2) doté d'un guide associé aux cartes de données étant prévu, un arbre de transport (42) actionné par un moteur s'engageant dans l'espace de déplacement des cartes de données et des moyens étant prévus pour permettre la fermeture d'une ouverture d'insertion du lecteur de cartes de données,
**caractérisé en ce**
**qu'**une bascule (13) à deux bras, qui peut pivoter autour d'un axe disposé transversalement par rapport aux directions de déplacement des cartes de données (68) et dont un bras présente un élément de fermeture (57) et l'autre bras au moins un élément palpeur (66, 67) est prévue,
**que** la distance entre l'élément de fermeture (57) et l'élément palpeur (66, 67) est égale ou supérieure à la longueur d'une carte de données (68), qu'au moins sur l'élément de fermeture (57), des surfaces (69, 70) inclinées vers le plan de déplacement des cartes de données (68) sont configurées en forme de V de telle sorte qu'un basculement de la bascule (13) ait lieu lors de l'insertion ou de l'extraction d'une carte de données (68) et
**que** si une carte de données (68) se trouve dans la position de lecture/écriture, la carte de données (68) s'engage dans la plage de pivotement de l'élément palpeur (66, 67) de telle sorte que la bascule (13) soit arrêtée dans la position de fermeture.

2. Lecteur de cartes de données selon la revendication 1,
**caractérisé en ce**
**que** la bascule (13) est montée sur l'arbre de transport (42) doté d'au moins un élément de frottement (43, 44, 45).

3. Lecteur de cartes de données selon la revendication 1,
**caractérisé en ce**
**que** la bascule (13) est configurée avec des bras différents, l'élément de fermeture (57) étant prévu sur le plus long bras de la bascule (13).

4. Lecteur de cartes de données selon la revendication 1,
**caractérisé en ce**
**qu'**au moins l'élément palpeur (66, 67) est réalisé directement sur la bascule (13).

5. Lecteur de cartes de données selon la revendication 1,
**caractérisé en ce**
**que** des découpes (28, 29) permettant la traversée de l'élément palpeur (66, 67) et de l'élément de fermeture (57) à travers l'espace de déplacement des cartes de données (68) sont prévues sur le support (2).

6. Lecteur de cartes de données selon la revendication 1,
**caractérisé en ce**
**que** la longueur de l'élément de fermeture (57) est plus grande que la largeur du guide associé aux cartes de données (68) dans le support et en ce qu'une rainure (56) qui correspond à la section transversale et à la longueur de l'élément de fermeture (57) est formée dans le support (2).

7. Lecteur de cartes de données selon la revendication 6,
**caractérisé en ce**
**que** la rainure (56) est recouverte d'un matériau élastomère.

8. Lecteur de cartes de données selon la revendication 1,
**caractérisé en ce**
**qu'**un pont (14) qui peut être relié au support (2) et qui chevauche la bascule (13) est prévu et
**qu'**un jeu de contacts de lecture/écriture (19), qui entrent en contact avec les contacts d'une carte de données (68) située dans la position de lecture/écriture, est fixé sur le pont (14).

9. Lecteur de cartes de données selon la revendication 1,
**caractérisé en ce**
**qu'**un jeu de contacts de lecture/écriture (19), qui entrent en contact avec les contacts d'une carte de données (68) située dans la position de lecture/écriture, est fixé directement sur la bascule (13).

10. Lecteur de cartes de données selon la revendication 1,
**caractérisé en ce**
**qu'**un recouvrement (15) qui peut être relié au support (2) et qui chevauche la bascule (13) est prévu et forme avec le support (2) un interstice d'orientation (18) associé à l'élément de fermeture (57).

11. Lecteur de cartes de données selon la revendication 1,
**caractérisé en ce**
**qu'**un interstice d'orientation (18) associé à l'élément de fermeture (57) est formé directement sur le support (2).

12. Lecteur de cartes de données selon la revendication 10,
**caractérisé en ce**
**qu'**au moins un abaisseur élastique (16, 17) associé à la bascule (13) est formé sur le recouvrement (15).

13. Lecteur de cartes de données selon la revendication 1,
**caractérisé en ce**
**qu'**au moins un abaisseur élastique (16, 17) associé à la bascule (13) est formé directement sur le support (2).

14. Lecteur de cartes de données selon la revendication 1,
**caractérisé en ce**
**que** le support (2) est essentiellement configuré comme plaque plane dotée d'un creux (24) qui sert de guide pour les cartes de données (68), en ce que sur le support (2) sont formés des moyens de maintien (30, 31, 32, 33, 34) d'un moteur d'entraînement (6), des moyens de montage (40, 41) de l'arbre de transport (42) et des moyens de montage (35, 36, 37, 38, 39) d'au moins un arbre de liaison (9) qui assure la liaison à entraînement entre le moteur d'entraînement et l'arbre de transport (42) et en ce que des tiges d'écartement (3, 4, 5) orientées dans la même direction que les moyens de maintien et de montage sont formées sur le support (2) pour fixer le lecteur de cartes de données (1) sur son emplacement de montage.

15. Lecteur de cartes de données selon la revendication 1,
**caractérisé en ce**
**que** des commutateurs (22, 23) qui détectent qu'une carte de données (68) est en position d'insertion/extraction ou dans la position de lecture/écriture sont prévus et en ce que les commutateurs (22, 23), le jeu de contacts de lecture/écriture (19) et le moteur d'entraînement (6) sont reliés au moyen d'une piste conductive (21) flexible qui est sortie du lecteur de cartes de données (1).

16. Lecteur de cartes de données selon la revendication 1,
**caractérisé en ce**
**que** la bascule (13) est réalisée en une seule pièce et est profilée en forme de U, en ce que des alésages de montage (82, 83) alignés l'un sur l'autre sont ménagés dans les branches (80, 81) de la bascule (13) et en ce qu'un élément de fermeture (76) et au moins un élément palpeur (78, 79) sont formés parallèlement à l'axe de montage directement sur la bascule.
